# EUROPÄISCHE PATENTSCHRIFT

(11) **EP 3 260 660 B1**
(45) Veröffentlichungstag und Bekanntmachung des Hinweises auf die Patenterteilung: **15.03.2023**
(21) Anmeldenummer: 17177552.1
(22) Anmeldetag: 23.06.2017
(51) Int. Cl.: F01D 5/14

(54) **LAUF- ODER LEITSCHAUFEL MIT ERHABENEN BEREICHEN**
ROTOR OR STATOR VANE HAVING RAISED AREAS
AUBE DIRECTRICE OU MOBILE COMPRENANT DES ZONES EN RELIEF

(30) Priorität: 23.06.2016 DE 102016211315
(43) Veröffentlichungstag der Anmeldung: 27.12.2017
(73) Patentinhaber: MTU Aero Engines AG, 80995 München (DE)
(72) Erfinder: Brettschneider, Markus, 85757 Karlsfeld (DE); Maatouk, Fadi, 80807 München (DE)

(56) Entgegenhaltungen:
- EP-A1- 2 136 033
- EP-A1- 2 487 329
- EP-A2- 3 225 781
- US-A1- 2011 014 056
- US-A1- 2015 204 196

## Beschreibung

Die vorliegende Erfindung betrifft eine Schaufel, insbesondere eine Turbinenstufe, einer Gasturbine, insbesondere einer Fluggasturbine, mit einem Schaufelfuß und einem mit dem Schaufelfuß verbundenen Schaufelblatt, wobei das Schaufelblatt eine Druckseite und eine Saugseite aufweist, und wobei der Schaufelfuß an seiner dem Schaufelblatt zugewandten radialen Außenseite wenigstens einen erhabenen Bereich aufweist.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt.

Es ist bekannt, im sogenannten Ringraumkanal im Bereich der Laufschaufelfüße Bereiche vorzusehen, die gegenüber einer idealen Ringraumgeometrie, die zum Beispiel zylinder- oder konusförmig sein kann, erhaben sind, d.h. in den Ringraumkanal hineinragen, um die Strömungsverhältnisse im Ringraumkanal positiv zu beeinflussen.

Ringraumwände mit erhabenen Bereichen sind beispielsweise aus den US20150204196A1, EP2487329A1, EP2136033A1, US20110014056A1, EP3225781A2 bekannt.

Aufgabe der Erfindung ist es, die Strömungsverhältnisse weiter zu verbessern, insbesondere Sekundärströmungen, wie etwa Kanalwirbel zu vermeiden.

Zur Lösung dieser Aufgabe wird eine Schaufel nach Anspruch 1 vorgeschlagen. Unter anderem weist die Schaufel der Druckseite einen ersten erhabenen Bereich und auf der Saugseite einen zweiten erhabenen Bereich auf, wobei ein höchster Punkt des ersten erhabenen Bereichs im Wesentlichen direkt benachbart zur Druckseite angeordnet ist, und ein höchster Punkt des zweiten erhabenen Bereichs im Wesentlichen direkt benachbart zur Saugseite angeordnet ist.

Anders ausgedrückt kann auch gesagt werden, dass der höchste Punkt des ersten erhabenen Bereiches die Druckseite des Schaufelblatts berührt oder nur geringfügig von dieser beabstandet ist und dass der höchste Punkt des zweiten erhabenen Bereichs die Saugseite des Schaufelblatts berührt oder nur geringfügig von dieser beabstandet ist. Mit "geringfügig" ist dabei zu verstehen, dass der Abstand maximal 5%, vorzugsweise maximal 1% einer Sehnenlänge, d.h. einer Länge zwischen einer Vorderkante und einer Hinterkante des Schaufelblattes beträgt. Die Berührung zwischen den beiden erhabenen Bereichen und dem Schaufelblatt können dabei nicht nur auf den jeweiligen höchsten Punkt beschränkt sein, sondern sich über einen Kontaktbereich entlang der Saugseite bzw. der Druckseite erstrecken.

Erfindungsgemäß ist der zweite erhabene Bereich vollständig innerhalb der axial vorderen Hälfte des Schaufelblatts angeordnet.

Durch diese spezifische Anordnung der erhabenen Bereiche, die auch als eine Konturierung des Ringraums bezeichnet werden kann, kann das statische Druckfeld an den Seitenwänden und an den Schaufeln im Randbereich so beeinflusst werden, dass die Sekundärströmungen reduziert werden können. Hierdurch lassen sich Verluste verringern und kann der Zustrom auf ein stromabwärts liegendes Schaufelgitter verbessert werden.

Der höchste Punkt des ersten erhabenen Bereichs kann in Strömungsrichtung in einer vorderen Hälfte einer Axialstrecke liegen, wobei die Axialstrecke eine Projektion einer Sehne ist, die einen Vorderkantenbereich und einen Hinterkantenbereich des Schaufelblatts verbindet.

Dabei kann der höchste Punkt des zweiten erhabenen Bereichs in einem vorderen ersten Viertel der Axialstrecke liegen.

Ferner kann der höchste Punkt des ersten erhabenen Bereichs in einem zweiten Viertel der Axialstrecke liegen.

Die Schaufel kann als Laufschaufel oder als Leitschaufel ausgebildet sein.

Ferner ist es als weitere selbständiger Aspekt der Erfindung auch denkbar eine analoge Ausgestaltung von erhabenen Bereichen an einem radial äußeren Deckband vorzusehen, also an einem radial äußeren Ende des Schaufelblatts, wobei die erhabenen Bereich sich in einem solchen Fall nach radial innen erheben. Auch bei erhabenen Bereichen am Deckband können diese, die oben für die Schaufel beschriebenen Eigenschaften aufweisen.

Die Erfindung betrifft ferner auch einen Rotor mit einer Rotorscheibe und mit mehreren in Umfangsrichtung nebeneinander angeordneten, oben beschriebenen Schaufeln. In einem solchen Fall sind die Schaufeln als Laufschaufeln ausgebildet.

Bei dem Rotor können die Schaufeln mittels ihres Schaufelfußes formschlüssig mit der Rotorscheibe verbunden sein. Hierbei können die Schaufelfüße eine übliche schwalbenschwanz- oder tannenbaumförmige Ausgestaltung aufweisen und in entsprechenden Schaufelfußaufnahmen in der Rotorscheibe aufgenommen sein.

Alternativ können bei dem Rotor die Schaufeln und die Rotorscheibe integral miteinander verbunden sind. Hierbei handelt es sich um eine sogenannte Blisk (Blade Integrated Disk), also einer Scheibe mit materialschlüssig oder integral ausgebildeten Laufschaufeln. Alternativ kann auch eine so genannte BLING (Blade Integrated Ring) für den erfindungsgemäßen Rotor verwendet werden. Dabei bildet eine radiale Außenseite der Rotorscheibe, die in Umfangsrichtung zwischen zwei Schaufeln liegt, die radiale Außenseite des Schaufelfußes im Sinne der hier verwendeten Terminologie. Somit sind die erhabenen Bereiche quasi an der radialen Außenseite der Rotorscheibe vorgesehen.

Schließlich betrifft die Erfindung auch eine Gasturbine, insbesondere Fluggasturbine mit wenigstens einer Rotorscheibe, wie sie oben in Alternativen beschrieben worden ist.

Nachfolgend wird die Erfindung unter Bezugnahme auf die anliegenden Figuren beispielhaft und nicht einschränkend beschrieben.

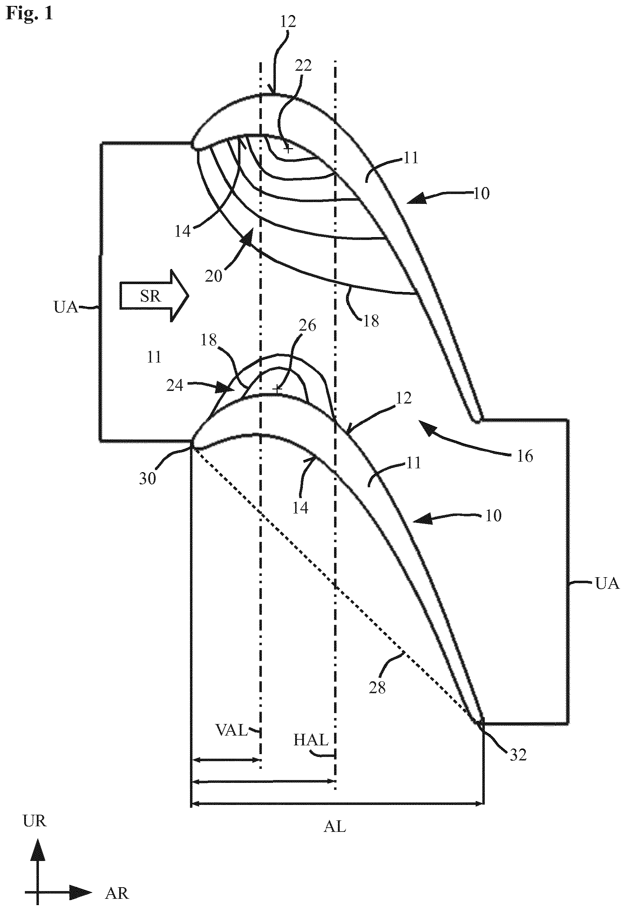

Fig. 1 zeigt in einer schematischen vereinfachten Darstellung zwei benachbarte Schaufeln, die als Laufschaufeln ausgebildet sind, und eine Anordnung von erhabenen Bereichen an der Saugseite und der Druckseite.

In Fig. 1 sind zwei Laufschaufeln 10 mit ihrem jeweiligen Schaufelblatt 11 ersichtlich, die jeweils eine Saugseite 12 und eine Druckseite 14 aufweisen. Die beiden Laufschaufeln 10 bzw. Schaufelblätter 11 sind in Umfangsrichtung UR nebeneinander angeordnet in einem Abstand UA. Dabei können die beiden Laufschaufeln 10, beispielsweise durch einen Gussprozess, integral einstückig über eine gemeinsame radial innere Plattform miteinander verbunden sein, also Teil eines Laufschaufelclusters bilden, oder sie können alternativ auch durch einen in der schematischen Figur nicht dargestellten Spalt in der radial inneren Plattform voneinander getrennt sein, also insbesondere separat hergestellte Einzellaufschaufeln sein. Zwischen den beiden Laufschaufeln 10 ist ein Strömungskanal 16 gebildet, durch den das Fluid, insbesondere Heißgas einer Gasturbine, in der zur Axialrichtung AR im Wesentlichen parallelen Hauptströmungsrichtung SR hindurch strömt. Die Laufschaufeln 10 sind vorzugsweise in einem Heißgas führenden Ringraumkanal einer Turbinenstufe, insbesondere einer Niederdruckturbinenstufe, einer Gasturbine angeordnet.

Bei der in der Figur oben dargestellten Laufschaufel 10 sind schematisch und vereinfacht Höhenlinien 18 auf der Druckseite 14 eingezeichnet. Diese Höhenlinien repräsentieren einen ersten erhabenen Bereich 20. Der erhabene Bereich 20 erhebt sich ausgehend von einem Grundniveau, dem so genannten idealen Ringraum, zwischen den beiden Laufschaufeln 10 bis zur Druckseite 14 hin. Der erste erhabene Bereich 20 weist einen höchsten Punkt 22 auf, der bei der Druckseite 14, insbesondere im Wesentlichen direkt benachbart zur Druckseite 14, angeordnet ist. Anders ausgedrückt kann auch gesagt werden, dass der erste erhabene Bereich 20 in die Druckseite 14 übergeht bzw. die Druckseite 14 berührt.

Bei der unteren Laufschaufel 10 ist mit einer gestrichelten Linie eine Schaufelsehne 28 dargestellt, die eine Vorderkante 30 und eine Hinterkante 32 der Laufschaufel 10 gedanklich verbindet. Die Projektion dieser Schaufelsehne 28 auf die Axialrichtung AR bildet die Axiallänge AL der Laufschaufeln 10, die auch als Axialstrecke bezeichnet werden kann. Durch zwei in Umfangsrichtung UR verlaufende, strichpunktierte Linien HAL und VAL sind qualitativ die halbe Axiallänge HAL und ein Viertel der Axiallänge VAL eingezeichnet. Anders ausgedrückt kann man auch sagen, dass VAL gleich 0,25xAL ist und dass HAL gleich 0,5xAL beträgt.

Wie aus der Darstellung ersichtlich, ist es bevorzugt, dass der höchste Punkt 22 von dem ersten erhabenen Bereich 20 bezogen auf die Strömungsrichtung SR (bzw. Axialrichtung AR) in der vorderen Hälfte angeordnet ist. Erfindungsgemäß ist der höchste Punkt 26 von dem zweiten erhabenen Bereich bezogen auf die Strömungsrichtung SR (bzw. Axialrichtung AR) in der vorderen Hälfte angeordnet. Die höchsten Punkte 22, 26 weisen bezogen auf die Axiallänge AL also eine Position auf, die gleich oder kleiner als 0,5xAL beträgt. Der höchste Punkt 26 des zweiten erhabenen Bereichs 24 kann auch im ersten Viertel der Axiallänge AL liegen, also insbesondere eine Position einnehmen die kleiner ist als VAL, auch wenn dies in der Zeichnung nicht dargestellt ist. Vorteilhaft sind auch Kombinationen, bei welchen der höchste Punkt 22 des ersten erhabenen Bereichs 20 zwischen VAL und HAL liegt und der höchste Punkt 26 des zweiten erhabenen Bereichs 24 kleiner als VAL ist.

Für den ersten erhabenen Bereich 20 kann der höchste Punkt 22 insbesondere in dem Bereich zwischen VAL und HAL liegen. Die Position des höchsten Punktes 22 ist also gleich oder kleiner als HAL und größer oder gleich VAL. Der zweite erhabene Bereich 24 ist innerhalb der vorderen Hälfte der Saugseite 12 angeordnet. Anders ausgedrückt, erstreckt sich der vollständige zweite erhabene Bereich 24 maximal bis zur halben Axiallänge HAL.

Durch die hier vorgestellten erhabenen Bereiche 20, 24, die bezogen auf die Axiallänge AL der Laufschaufeln 10 dimensioniert bzw. angeordnet sind, kann das statische Druckfeld auf den Seitenwänden und an den Schaufeln im Randbereich so beeinflusst werden, dass Sekundärströmungen (Kanalwirbel) reduziert werden können. Hierdurch können Strömungsverluste verringert werden und das Zuströmen von Fluid bzw. Heißgas auf ein stromabwärtiges Schaufelgitter verbessert werden.

Auch wenn die Erfindung in den Figuren nur unter Bezugnahme auf eine Laufschaufel erläutert worden ist, können in analoger Weise erhabene Bereiche auch an einer Leitschaufel vorgesehen sein. Ferner ist es auch denkbar, dass ein radial äußeres Deckband in analoger Weise erhabene Bereiche aufweist.

### Bezugszeichenliste

- 10: (Lauf-)Schaufel
- 11: Schaufelblatt
- 12: Saugseite
- 14: Druckseite
- 16: Strömungskanal
- 18: Höhenlinie
- 20: erster erhabener Bereich
- 22: höchster Punkt
- 24: zweiter erhabener Bereich
- 26: höchster Punkt
- 28: Sehne
- 30: Vorderkante
- 32: Hinterkante
- AL: Axiallänge
- AR: Axialrichtung
- HAL: halbe Axiallänge
- SR: Strömungsrichtung
- UA: Abstand in Umfangsrichtung
- UR: Umfangsrichtung
- VAL: ein Viertel Axiallänge

## Patentansprüche

1. Schaufel (10), insbesondere einer Turbinenstufe, einer Gasturbine, insbesondere einer Fluggasturbine, mit einem Schaufelfuß und einem mit dem Schaufelfuß verbundenen Schaufelblatt (11), wobei das Schaufelblatt (11) eine Druckseite (14) und eine Saugseite (12) aufweist, und wobei der Schaufelfuß an seiner dem Schaufelblatt zugewandten radialen Außenseite einen ersten erhabenen Bereich (20) und einen zweiten erhabenen Bereich (24) aufweist, , wobei ein höchster Punkt (22) des ersten erhabenen Bereichs (20) die Druckseite (14) berührt oder maximal 5% der Sehnenlänge des Schaufelblattes (11) von der Druckseite (14) beabstandet ist, und ein höchster Punkt (26) des zweiten erhabenen Bereichs (24) die Saugseite (12) berührt oder maximal 5% der Sehnenlänge des Schaufelblattes (11) von der Saugseite (12) beabstandet ist, **dadurch gekennzeichnet, dass** der zweite erhabene Bereich (24) vollständig innerhalb der axial vorderen Hälfte des Schaufelblatts (11) angeordnet ist.

2. Schaufel nach Anspruch 1, **dadurch gekennzeichnet, dass** der höchste Punkt (22) des ersten erhabenen Bereichs (20) und der höchste Punkt (26) des zweiten erhabenen Bereichs (24) in Strömungsrichtung (SR) in einer vorderen Hälfte einer Axialstrecke (AL) liegen, wobei die Axialstrecke (AL) eine Projektion einer Sehne (28) ist, die einen Vorderkantenbereich (30) und einen Hinterkantenbereich (32) des Schaufelblatts (11) verbindet.

3. Schaufel nach Anspruch 2, **dadurch gekennzeichnet, dass** der höchste Punkt (26) des zweiten erhabenen Bereichs (24) in einem vorderen ersten Viertel (VAL) der Axialstrecke (AL) liegt.

4. Schaufel nach Anspruch 2 oder 3, **dadurch gekennzeichnet, dass** der höchste Punkt (22) des ersten erhabenen Bereichs (20) in einem zweiten Viertel der Axialstrecke (AL) liegt.

5. Schaufel nach einem der vorhergehenden Ansprüche, **dadurch gekennzeichnet, dass** die Schaufel eine Laufschaufel oder eine Leitschaufel ist.

6. Rotor mit einer Rotorscheibe und mehreren in Umfangsrichtung (UR) nebeneinander angeordneten Schaufeln (10) nach einem der vorhergehenden Ansprüche, wobei die Schaufeln (10) Laufschaufeln sind.

7. Rotor nach Anspruch 6, **dadurch gekennzeichnet, dass** die Laufschaufeln mittels ihres Laufschaufelfußes formschlüssig mit der Rotorscheibe verbunden sind.

8. Rotor nach Anspruch 6, **dadurch gekennzeichnet dass** die Laufschaufeln und die Rotorscheibe integral miteinander verbunden sind, wobei die radiale Außenseite des Schaufelfußes durch eine radiale Außenseite der Rotorscheibe gebildet wird.

9. Gasturbine, insbesondere Fluggasturbine, mit wenigsten einem Rotor nach einem der Ansprüche 6 bis 8.

## Claims

1. A blade (10), in particular of a turbine stage, of a gas turbine, in particular of an aircraft gas turbine, comprising a blade root and an airfoil (11) connected to the blade root, the airfoil (11) having a pressure side (14) and a suction side (12), and the blade root having, on its radial outer side facing the airfoil, a first raised region (20) and a second raised region (24), a highest point (22) of the first raised region (20) touching the pressure side (14) or being spaced apart from the pressure side (14) by at most 5% of the chord length of the airfoil (11), and a highest point (26) of the second raised region (24) touching the suction side (12) or being spaced apart from the suction side (12) by at most 5% of the chord length of the airfoil (11), **characterized in that** the second raised region (24) is arranged completely within the axially front half of the airfoil (11).

2. The blade according to claim 1, **characterized in that** the highest point (22) of the first raised region (20) and the highest point (26) of the second raised region (24) in the flow direction (SR) are in a front half of an axial distance (AL), the axial distance (AL) being a projection of a chord (28) connecting a leading edge region (30) and a trailing edge region (32) of the airfoil (11).

3. The blade according to claim 2, **characterized in that** the highest point (26) of the second raised region (24) is in a front first quarter (VAL) of the axial distance (AL).

4. The blade according to either claim 2 or claim 3, **characterized in that** the highest point (22) of the first raised region (20) is in a second quarter of the axial distance (AL).

5. The blade according to any of the preceding claims, **characterized in that** the blade is a rotor blade or a stator blade.

6. A rotor comprising a rotor disk and a plurality of blades (10) arranged next to one another in the circumferential direction (UR) according to any of the preceding claims, wherein the blades (10) are rotor blades.

7. The rotor according to claim 6, **characterized in that** the rotor blades are interlockingly connected to the rotor disk by means of their rotor blade root.

8. The rotor according to claim 6, **characterized in that** the rotor blades and the rotor disk are integrally connected to one another, the radial outer side of the blade root being formed by a radial outer side of the rotor disk.

9. A gas turbine, in particular an aircraft gas turbine, comprising at least one rotor according to any of claims 6 to 8.

## Revendications

1. Aube (10), en particulier d'un étage de turbine, d'une turbine à gaz, en particulier d'une turbine à gaz d'aéronef, comportant un pied d'aube et une pale d'aube (11) reliée au pied d'aube, dans laquelle la pale d'aube (11) présente un côté refoulement (14) et un côté aspiration (12), et dans laquelle le pied d'aube présente, sur son côté extérieur radial tourné vers la pale d'aube, une première zone surélevée (20) et une seconde zone surélevée (24), dans laquelle un point le plus élevé (22) de la première zone surélevée (20) touche le côté refoulement (14) ou est espacé du côté refoulement (14) d'au plus 5 % de la longueur de corde de la pale d'aube (11), et un point le plus élevé (26) de la seconde zone surélevée (24) touche le côté aspiration (12) ou est espacé du côté aspiration (12) d'au plus 5 % de la longueur de corde de la pale d'aube (11), **caractérisée en ce que** la seconde zone surélevée (24) est entièrement disposée à l'intérieur de la moitié axialement avant de la pale d'aube (11).

2. Aube selon la revendication 1, **caractérisée en ce que** le point le plus élevé (22) de la première zone surélevée (20) et le point le plus élevé (26) de la seconde zone surélevée (24) sont situés dans une moitié avant d'une section axiale (AL) dans la direction d'écoulement (SR), dans laquelle la section axiale (AL) est une projection d'une corde (28) qui relie une zone de bord d'attaque (30) et une zone de bord de fuite (32) de la pale d'aube (11).

3. Aube selon la revendication 2, **caractérisée en ce que** le point le plus élevé (26) de la seconde zone surélevée (24) est situé dans un premier quart avant (VAL) de la section axiale (AL).

4. Aube selon la revendication 2 ou 3, **caractérisée en ce que** le point le plus élevé (22) de la première zone surélevée (20) est situé dans un deuxième quart de la section axiale (AL).

5. Aube selon l'une des revendications précédentes,
**caractérisée en ce que** l'aube est une aube mobile ou une aube directrice.

6. Rotor comportant un disque de rotor et plusieurs aubes (10) disposées côte à côte dans la direction circonférentielle (UR) selon l'une des revendications précédentes, dans lequel les aubes (10) sont des aubes mobiles.

7. Rotor selon la revendication 6, **caractérisé en ce que** les aubes mobiles sont reliées par complémentarité de forme au disque de rotor au moyen de leur pied d'aube mobile.

8. Rotor selon la revendication 6, **caractérisé en ce que** les aubes mobiles et le disque de rotor sont reliés entre eux d'un seul tenant, dans lequel le côté extérieur radial du pied d'aube est formé par un côté extérieur radial du disque de rotor.

9. Turbine à gaz, en particulier turbine à gaz d'aéronef, comportant au moins un rotor selon l'une des revendications 6 à 8.
